(19) Europäisches Patentamt
European Patent Office
Office européen des brevets

(11) EP 4 563 984 A1

(12) EUROPEAN PATENT APPLICATION
published in accordance with Art. 153(4) EPC

(43) Date of publication:
04.06.2025 Bulletin 2025/23

(51) International Patent Classification (IPC):
G01N 23/04 $^{(2018.01)}$

(21) Application number: 23846032.3

(22) Date of filing: 09.06.2023

(52) Cooperative Patent Classification (CPC):
G01N 23/04

(86) International application number:
PCT/JP2023/021456

(87) International publication number:
WO 2024/024296 (01.02.2024 Gazette 2024/05)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 27.07.2022 JP 2022119328

(71) Applicant: Toray Industries, Inc.
Tokyo 103-8666 (JP)

(72) Inventors:
• YAMAMURA, Ayuki
Otsu-shi, Shiga 520-8558 (JP)
• HAYASHI, Shohei
Otsu-shi, Shiga 520-8558 (JP)
• NAKAI, Yasuhiro
Otsu-shi, Shiga 520-8558 (JP)

(74) Representative: Hoefer & Partner Patentanwälte
mbB
Pilgersheimer Straße 20
81543 München (DE)

(54) X-RAY INSPECTION DEVICE AND X-RAY INSPECTION METHOD

(57) An X-ray inspection device according to the present invention includes an X-ray radiation device configured to emit an X-ray toward an inspected object, a scintillator configured to convert an X-ray emitted from the X-ray radiation device and incident through the inspected object into visible light, and an imaging device including an optical unit configured to collect the visible light emitted from the scintillator, the imaging device being configured to receive the visible light. The X-ray radiation device and the scintillator are installed such that the following formula (1) is 30 $\mu$m or less, where L1 [mm] represents a distance from a radiation position of the X-ray radiation device to an installation position or a conveyance position of the inspected object, L2 [mm] represents a distance from the radiation position to the scintillator, and R [$\mu$m] represents a focal diameter of the X-ray radiation device:

Formula (1): $(L2 - L1) \times R/L1$

FIG.1

EP 4 563 984 A1

**Description**

Field

The present invention relates to an X-ray inspection device and an X-ray inspection method. Background
X-ray inspection is a general inspection method using radiation, and is applied to a wide range of fields such as medical care, food, and industry. In the industrial field, an X-ray is radiated to a product or the like, an X-ray transmitted through the product or the like is imaged, and a surface and an inside of the product or the like are visualized to inspect a foreign substance and a defective portion.

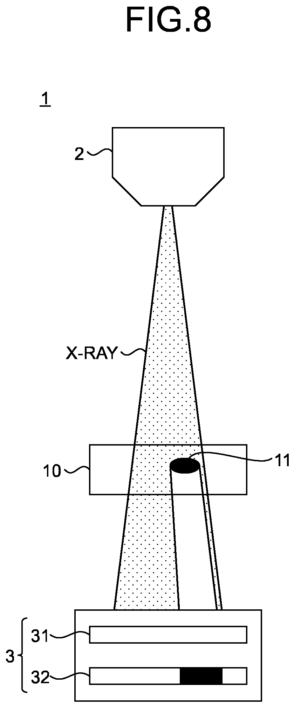

In recent years, for example, in the battery industry and the like, it is strongly required to prevent metal foreign matters from being mixed into products, and metal inspection using X-rays is also widely performed. Conventional X-ray inspection will be described with reference to FIG. 8. FIG. 8 is a schematic view of an example of a conventional X-ray inspection device. In general, the X-ray inspection device 1 includes an X-ray radiation device 2 and an imaging device 3, and inspects whether a metal foreign matter or the like is mixed in an inspected object 10. An X-ray is radiated from the X-ray radiation device 2 to the inspected object 10, and the X-ray transmitted through the inspected object 10 is received by the imaging device 3. At this time, if a metal foreign matter 11 is mixed in the inspected object 10, the X-ray is absorbed and becomes a shadow at the portion, and the X-ray is not incident on the corresponding portion of the imaging device 3. The imaging device 3 includes a scintillator 31 that emits fluorescence based on the incident X-ray dose and emits visible light, and a sensor 32 that receives the visible light emitted by the scintillator 31. The scintillator 31 at the position where the X-ray is incident emits fluorescence and emits visible light, and the visible light is received by the sensor 32. The scintillator 31 does not emit fluorescence at the portion shaded by the metal foreign matter 11, and as a result, the portion becomes a dark signal in the sensor 32. Based on this signal, it is determined whether or not the metal foreign matter 11 is contained in the inspected object 10.

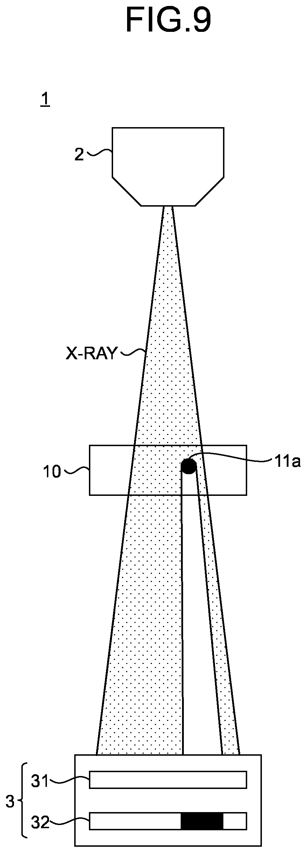

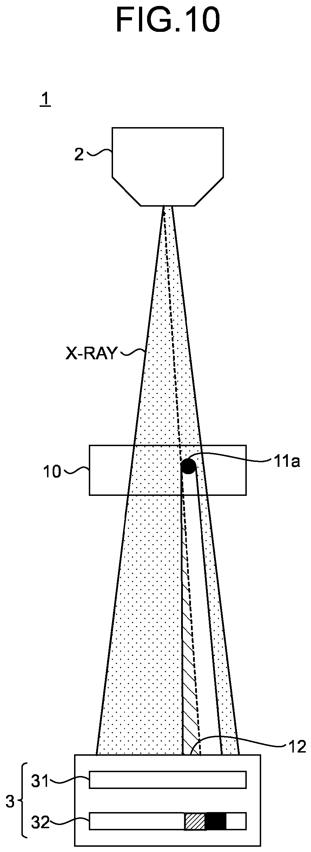

Conventionally, the size of a metal foreign matter to be inspected is large, but in response to an increasing demand for safety in battery applications and the like, an inspection target having a size of about 200 $\mu$m has been reduced to 50 $\mu$m or less. A response when a minute metal foreign matter is inspected in the conventional X-ray inspection will be described with reference to FIG. 9. FIG. 9 is a schematic view when a minute metal foreign matter is inspected by a conventional X-ray inspection device. As illustrated in FIG. 9, the distance from the inspected object 10 to the imaging device 3 is increased, and the shadow of the minute metal foreign matter 11a in the inspected object 10 is geometrically enlarged. As a result, the corresponding portion in the imaging device 3 is enlarged, and detection by the sensor 32 is stabilized. However, it is known that the detection sensitivity of the minute metal foreign matter is lowered by this method, and this will be described with reference to FIG. 10. FIG. 10 is an explanatory view of blurring (penumbra) in the X-ray inspection. The X-ray is radiated from the X-ray radiation device 2, but the radiation position has a finite width (focal diameter), and cannot be ignored particularly when the metal foreign matter to be inspected becomes small. In this case, as illustrated in FIG. 10, the X-ray intrudes into a region that should originally be a shadow of the metal foreign matter 11a, and a blur (penumbra) 12 occurs. In the portion corresponding to the blur 12, the dark signal intensity of the sensor 32 becomes weak, and thus the metal foreign matter 11a cannot be detected with high accuracy.

As a means for solving this, for example, there is Patent Literature 1. In Patent Literature 1, in order to eliminate the blur 12, the scintillator 31 is brought close to the inspected object 10. The width of the blur 12 is reduced by bringing the scintillator closer. In addition, using a visible light camera (and lens) as the sensor 32 improves imaging resolution on the scintillator. Thus, minute metal foreign matter can be detected.

Citation List

Patent Literature

Patent Literature 1: JP 2019-215205 A

Summary

Technical Problem

However, it is practically difficult to make the distance between the inspected object and the scintillator substantially zero as in Patent Literature 1, and it is necessary to keep a certain distance. In particular, when the inspected object is being conveyed, it is essential to keep a certain distance. Furthermore, for example, in a case where a telecentric lens is used, there is no degree of freedom to adjust the resolution for imaging, and if the size is too small, such as 4 $\mu$m or less, the range to be able to image is narrowed, and many imaging devices are required to achieve a necessary inspection width. Furthermore, if the imaging resolution is too small, there is a case where stable inspection cannot be performed due to unevenness of an X-ray dose radiated from the X-ray radiation device 2, variations in fluorescence emission of the scintillator 31, and the like.

The present invention provides an X-ray inspection device and an X-ray inspection method that can be applied not only to a stationary inspected object but also to an inspected object being conveyed, can reduce the influence of blurring caused by the focal diameter of the X-ray radiation device having a finite width, and can inspect a minute metal foreign matter.

Solution to Problem

[1] An X-ray inspection device according to the present invention to solve the object includes: an X-ray radiation device configured to emit an X-ray toward an inspected object; a scintillator configured to convert an X-ray emitted from the X-ray radiation device and incident through the inspected object into visible light; and an imaging device including an optical unit configured to collect the visible light emitted from the scintillator, the imaging device being configured to receive the visible light. The X-ray radiation device and the scintillator are installed such that the following formula (1) is 30 μm or less, where L1 [mm] represents a distance from a radiation position of the X-ray radiation device to an installation position or a conveyance position of the inspected object, L2 [mm] represents a distance from the radiation position to the scintillator, and R [μm] represents a focal diameter of the X-ray radiation device:

$$\text{Formula (1): } (L2 - L1) \times R/L1$$

The X-ray inspection device according to the present invention is preferably any one of the following aspects [2] to [8].
[2] The X-ray inspection device according to [1], wherein imaging resolution of the imaging device for imaging the scintillator is 60 μm or less.
[3] The X-ray inspection device according to [1] or [2], wherein the imaging device is installed so as to image a facing surface that is included in the scintillator and that faces the inspected object.
[4] The X-ray inspection device according to [3], wherein the inspected object is a light transmissive object, and the imaging device is installed so as to image the facing surface of the scintillator via the inspected object, the facing surface facing the inspected object.
[5] The X-ray inspection device according to [1] or [2], wherein the imaging device is installed so as to image an opposite surface that is included in the scintillator and that is opposite to the facing surface facing the inspected object.
[6] The X-ray inspection device according to any one of [1] to [5], wherein the imaging device is a line sensor camera or a time delay integration camera.
[7] The X-ray inspection device according to [3] or [4], wherein
the imaging device is a line sensor camera or a time delay integration camera, and a member configured to shield the X-ray incident on the scintillator in a region other than at least an imaged region of the scintillator imaged by the imaging device is installed between the installation position or the conveyance position of the inspected object and the scintillator.
[8] The X-ray inspection device according to [5], wherein the imaging device is a line sensor camera or a time delay integration camera, and a member that shields the X-ray incident on the scintillator in a region other than at least a facing region in a surface that is included in the scintillator and that faces the inspected object, the facing region being across the scintillator from an imaged region of the scintillator imaged by the imaging device, is installed between the installation position or the conveyance position of the inspected object and the scintillator.
[9] An X-ray inspection method according to the present invention to solve the object including: emitting an X-ray toward an inspected object; causing the emitted X-ray to be incident on a scintillator via the inspected object to convert the emitted X-ray into visible light by the scintillator; and collecting the visible light emitted from the scintillator using an optical unit to capture an image. A radiation position of the X-ray and a position of the scintillator are set such that the following formula (1) is one sixth or less of a minimum diameter of a defect to be detected defined for each inspected object, where L1 [mm] represents a distance from the radiation position of the X-ray to the inspected object, L2 [mm] represents a distance from the radiation position to the scintillator, and R [μm] represents a focal diameter of the X-ray at the radiation position of the X-ray:

$$\text{Formula (1): } (L2 - L1) \times R/L1$$

The X-ray inspection method according to the present invention is preferably any one of the following aspects [10] to [16].

[10] The X-ray inspection method according to [9], wherein imaging resolution for imaging the scintillator is one third or less of the minimum diameter of the defect to be detected defined for each inspected object.

[11] The X-ray inspection method according to [9] or [10], further including imaging a facing surface that is included in the scintillator and that faces the inspected object.

[12] The X-ray inspection method according to [11], wherein the inspected object is a light transmissive object, and the X-ray inspection method further includes imaging the facing surface of the scintillator via the inspected object, the facing surface facing the inspected object.

[13] The X-ray inspection method according to [9] or [10], further including imaging an opposite surface that is included in the scintillator and that is opposite to the facing surface facing the inspected object.

[14] The X-ray inspection method according to any one of [9] to [13], further including imaging the scintillator linearly.

[15] The X-ray inspection method according to [11] or [12], further including: imaging the scintillator linearly; and shielding the X-ray incident on the scintillator in a region other than at least a region where the scintillator is imaged.

[16] The X-ray inspection method according to [13], further including: imaging the scintillator linearly; and shielding the X-ray incident on the scintillator in a region other than at least a facing region in a surface that is included in the scintillator and that faces the inspected object, the facing region being across the scintillator from a region where the scintillator is imaged.

Advantageous Effects of Invention

According to the X-ray inspection device and the X-ray inspection method of the present invention, the influence of the blur caused by the focal diameter of the X-ray radiation device having the finite width can be reduced, and the minute metal foreign matter can be inspected.

Brief Description of Drawings

FIG. 1 is a schematic view of an embodiment of an X-ray inspection device of the present invention.

FIG. 2 is an example of a schematic view illustrating a relationship between positions where an X-ray radiation device, an inspected object, and a scintillator are installed, and a focal diameter and a blur width of the X-ray radiation device.

FIG. 3 is a schematic diagram of an example of the scintillator.

FIG. 4 is a schematic view of another embodiment of the X-ray inspection device of the present invention, in which a facing surface that is included in the scintillator and that faces an inspected object is imaged.

FIG. 5 is a schematic view of an example of restricting an X-ray incident region on a scintillator.

FIG. 6 is a schematic view of still another embodiment of an X-ray inspection device of the present invention, in which a member for shielding an X-ray is installed.

FIG. 7 is a schematic view of still another embodiment of an X-ray inspection device of the present invention, in which the scintillator is imaged via an inspected object.

FIG. 8 is a schematic view of an example of a conventional X-ray inspection device.

FIG. 9 is a schematic view when a minute metal foreign matter is inspected by the conventional X-ray inspection device.

FIG. 10 is an explanatory view of blurring (penumbra) in the X-ray inspection.

Description of Embodiments

Hereinafter, embodiments of an X-ray inspection device and an X-ray inspection method of the present invention will be described in detail with reference to the drawings. Note that the present invention is not limited by the embodiment.

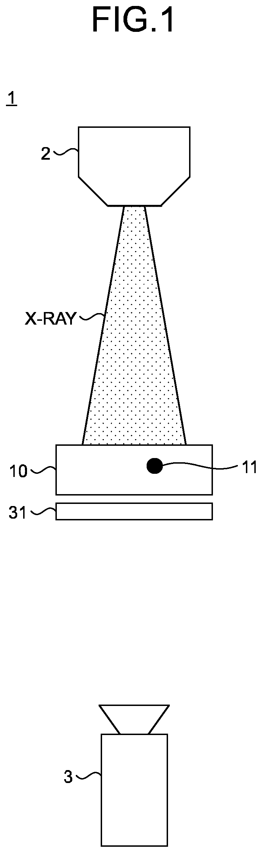

The X-ray inspection device according to the present embodiment will be described with reference to FIG. 1. FIG. 1 is a schematic view of an embodiment of the X-ray inspection device of the present invention. An X-ray inspection device 1 includes an X-ray radiation device 2, a scintillator 31, and an imaging device 3. The X-ray radiation device 2 radiates X-rays to an inspected object 10, and the scintillator 31 receives the X-rays transmitted through the inspected object 10. At this time, if a metal foreign matter 11 is contained in the inspected object 10, the X-ray is absorbed and becomes a shadow at the portion, and the X-ray is not incident on the corresponding portion of the scintillator 31. The scintillator 31 emits fluorescence at a portion receiving the X-ray and emits visible light. That is, a portion that becomes a shadow by the metal foreign matter 11 and on which the X-ray is not incident does not emit fluorescence and does not emit visible light. Irradiated visible light is received by the imaging device 3, and a metal foreign matter (abnormal portion) in the inspected object 10 is inspected based on the amount of received light at each portion.

The inspected object 10 may be any material that does not shield X-rays, such as a fiber, paper, a film, a resin, an integrated circuit, or a large-scale integrated circuit. The shape of the inspected object 10 may be an elongated shape, an elongated sheet shape, a sheet shape, or any other shape. In addition, the inspected object 10 may be in a stationary state, a conveyed state, or an intermittent conveyance state in which stationary and conveyance are repeated.

The X-ray radiation device 2 may be a sealed type or an open type, and may be a milli-focus type or a micro-focus type. As will be described later, a micro-focus type is preferable for reducing the influence of blurring. It is more preferable that a large current can be output if a voltage range that can be set is selected according to the type of the inspected object 10 and the inspected object 10 being conveyed is inspected.

The scintillator 31 converts incident X-rays into visible light, and preferably has high conversion efficiency and a large irradiation amount of visible light. In addition, it may be a particle type or a single crystal type, and it is preferable that light scattering inside the scintillator 31 is small. In addition, when the inspected object 10 is being conveyed, it is preferable that a short decay and low afterglow scintillator is used.

The imaging device 3 may be a line sensor camera, an area sensor camera, or a time delay integration camera. For example, it is preferable to use an area sensor camera in a state where the inspected object 10 is stationary, and to use a line sensor camera or a time delay integration camera in a state where the inspected object is being conveyed. The lens to be used may be a single focus type lens, a zoom type lens, or a telecentric lens.

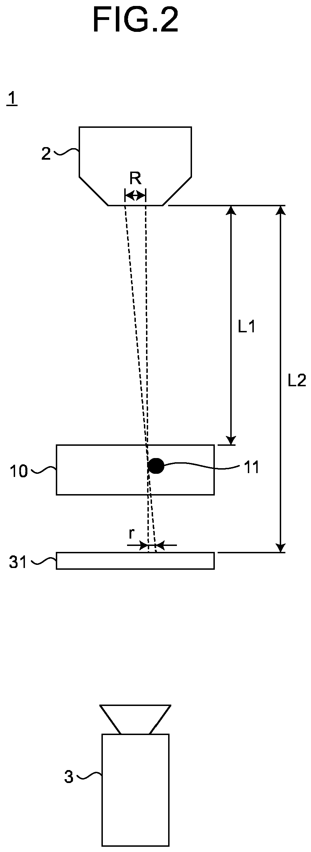

A condition for reducing blurring (penumbra) will be described with reference to FIG. 2. FIG. 2 is an example of a schematic view illustrating a relationship between positions where the X-ray radiation device 2, the inspected object 10, and the scintillator 31 are installed, and a focal diameter $R[\mu m]$ and a blur width $r[\mu m]$ of the X-ray radiation device 2.

The focal diameter R of the X-ray radiation device 2 may be a nominal value of the X-ray radiation device 2, or a scintillator may be installed immediately below a radiation position of the X-ray radiation device 2 and calculated from a light emission state of the scintillator.

The distance from the radiation position of the X-ray radiation device 2 to the inspected object 10 is defined as L1 [mm]. Here, the "distance to the inspected object" means a distance to the surface of the inspected object 10 (the surface on the upper side in FIG. 2). Actually, in order to calculate the accurate blur width r, it is necessary to measure the distance to the position where the metal foreign matter 11 exists, but since the thickness of the inspected object 10 can be ignored with respect to the length L1, there is no problem even with the distance to the surface of the inspected object 10. Since the thickness of the inspected object 10 can be ignored with respect to the length L1, when the position where the inspected object 10 is installed or the position where the inspected object 10 is conveyed in the X-ray inspection device 1 is determined in design, the distance from the radiation position to the installation position or the conveyance position may be set as L1.

The distance from the radiation position of the X-ray radiation device 2 to the scintillator 31 is defined as L2 [mm]. Here, the "distance to the scintillator" means a distance to the surface of the scintillator 31 (the surface on the upper side in FIG. 2). However, since the thickness of the scintillator 31 can be ignored with respect to the length L2, there is no problem even if the distance to any position of the thickness of the scintillator 31 is measured.

The blur width r can be calculated by the following formula (1).

$$\text{Formula (1): } r = (L2 - L1) \times R/L1.$$

In the situation illustrated in FIG. 2, blurring occurs at both ends of the metal foreign matter 11. Therefore, the shadow of the metal foreign matter 11 on the surface of the scintillator 31 is smaller by $(2 \times r)$ than in the ideal state without blurring. The inventors have extensively conducted studies, and resultantly found that it is necessary to set blur width r to one sixth or less with respect to a shadow width of metal foreign matter 11 in an ideal state without blur in order to stably detect metal foreign matter 11. For example, when the focal diameter R is 40 $\mu m$, L1 is 50 mm, and the size of the metal foreign matter 11 is 50 $\mu m$, L2 needs to be shorter than about 60 mm.

As illustrated in FIG. 9, in the conventional X-ray inspection device, the distance from the inspected object 10 to the scintillator 31 is increased to geometrically enlarge the shadow at the minute metal foreign matter 11a on the surface of the scintillator 31, but in the X-ray inspection device of the present invention, in order to reduce the blur width r, the difference between the distance L1 and the distance L2 is reduced, that is, the inspected object 10 and the scintillator 31 are brought close to each other. Therefore, the size of the metal foreign matter 11 is substantially the same as the size of the shadow at the metal foreign matter 11 on the surface of the scintillator 31 in the ideal state without blurring. Therefore, in order to stably detect the metal foreign matter 11, it is necessary to set the blur width r to one sixth or less with respect to the width of the metal foreign matter 11 having the minimum size that needs to be detected defined for each measurement object (the minimum diameter of the defect to be detected that is defined for each inspected object).

The size of the metal foreign matter 11 required to be detected by the X-ray inspection is becoming minute, but considering that the size required to be detected is 200 $\mu m$ or less, the blur width r is preferably 30 $\mu m$ or less, and it is preferable to design the X-ray inspection device so as to have the blur width r. Naturally, the blur width r is preferably as small as possible. In particular, in a state where the object to be inspected is conveyed, it is necessary to increase the current output of the X-ray radiation device 2 to increase the X-ray radiation amount and to increase the irradiation amount of the visible light in the scintillator 31. In this case, the focal diameter R is increased. Therefore, there is a limit to reducing the blur width r. It is more preferable to design the X-ray inspection device so that the blur width r becomes about 2 to 10 μm even in consideration of the size of the metal foreign matter that needs to be inspected in the future.

Furthermore, in general, in order to stably inspect an object required to be detected, imaging with an imaging resolution of one third or less of the object size is required. That is, it is preferable to set the imaging resolution for imaging the scintillator 31 to one third or less with respect to the width of the metal foreign matter 11 having the minimum size that needs to be detected defined for each inspected object (the minimum diameter of the defect to be detected that is defined for each inspected object). Therefore, considering that the size of the metal foreign matter 11 required to be detected is 200 μm or less, the imaging resolution for imaging the scintillator 31 is preferably 60 μm or less.

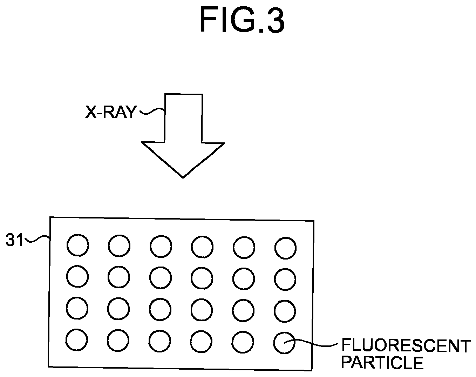

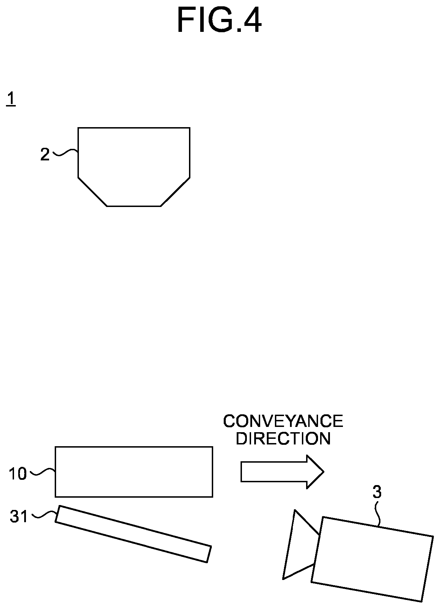

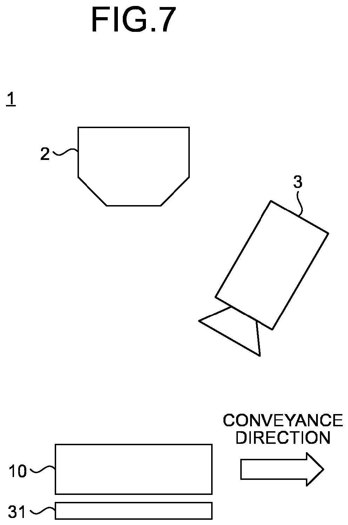

In addition, the fluorescence emission in the scintillator 31 is stronger toward the surface on which the X-ray is incident, and weaker toward the opposite surface. This phenomenon is particularly remarkable in the particle type scintillator, and will be described with reference to FIG. 3. FIG. 3 is a schematic view of an example of the scintillator 31. In the particle type scintillator, minute fluorescent particles are substantially uniformly distributed. In the fluorescent light emission, X-rays are incident on the fluorescent particles, and light emission corresponding to the incident amount is performed. Therefore, near the surface on which the X-ray is incident, fluorescence emission corresponding to the incident amount itself is performed, so that fluorescence emission is strong. However, when moving into the inside of the scintillator 31, that is, moving away from the surface on which the X-ray is incident, the X-ray is reduced (decayed) by the fluorescent particles existing until then, and the X-ray dose incident on the fluorescent particles at the distant location is small, so that the fluorescence emission is weakened. Therefore, for example, when it is necessary to shorten the exposure time of the imaging device 3 from the viewpoint of imaging resolution in a state where the inspected object 10 is conveyed, or the like, it is preferable to image a surface that is included in the scintillator 31 and that is on which the X-ray is incident, that is, the surface of the scintillator 31 is a facing surface that faces the inspected object 10. An example of this case will be described with reference to FIG. 4. FIG. 4 is a schematic view of an example of the X-ray inspection device that images the facing surface that is included in the scintillator 31 and that faces the inspected object 10. As illustrated in FIG. 4, the scintillator 31 is inclined, and a portion satisfying the formula (1) is imaged by the imaging device 3 in the facing surface that is included in the scintillator 31 and that faces the measurement object 10. If it is difficult to directly capture an image with the imaging device 3 due to the constraints of the space where the device is installed, the image may be captured via a mirror. In addition, as illustrated in FIG. 7, if the inspected object 10 has optical transparency, it is also possible to image the facing surface of the scintillator 31 via the inspected object 10, the facing surface facing the inspected object 10. That is, the imaging device 3 can be installed on the opposite side of the scintillator 31 with the inspected object 10 interposed between the imaging device 3 and the scintillator 31. In this case, the installation space of the imaging device 3 can also have an allowable range.

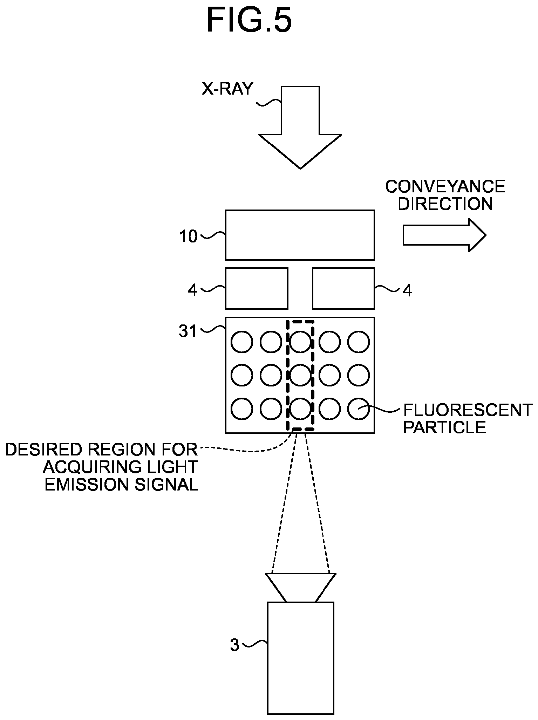

In addition, it is preferable to shield the X-ray incident on the scintillator 31 in a region other than the imaging region of the scintillator 31 imaged by the imaging device 3. This will be described with reference to FIG. 5. FIG. 5 is a schematic view of an example of restricting an X-ray incident region on a scintillator. In FIG. 5, the inspected object 10 is in a state of being conveyed, and the imaging device 3 uses, for example, a line sensor camera. Then, a member 4 (hereinafter, the X-ray shielding member) that shields X-rays is provided between the inspected object 10 and the scintillator 31. When the X-ray transmits through the inspected object 10 and enters the scintillator 31, the fluorescent particles inside the scintillator 31 emit light, but the fluorescent particles emit light in all directions. Then, fluorescent light emitted from fluorescent particles in a region other than the desired region for acquiring light emission signal with the imaging device 3 also enters the imaging device 3. This is noise and is preferably eliminated. For this purpose, in the scintillator 31, it is preferable to shield X-ray incidence to the region other than the desired region for acquiring light emission signal, and it is preferable to install the X-ray shielding member 4 between the inspected object 10 and the scintillator 31 so as to realize such a situation. By shielding the incidence of unnecessary X-rays with the X-ray shielding member 4, the influence of unnecessary light scattering inside the scintillator 31 can be reduced. This is preferably performed regardless of which of the facing surface that is included in the scintillator 31 and that faces the inspected object 10 or an opposite surface that is included in the scintillator 3 and that is opposite to the facing surface is imaged.

[Examples]

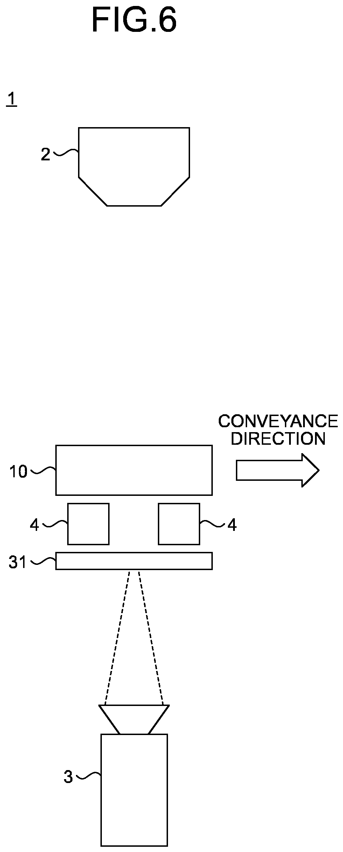

Next, an embodiment according to the present invention will be described with reference to FIGS. 6, 7, and 8. FIGS. 6 and 7 are schematic views of an embodiment of the X-ray inspection device of the present invention. The present invention is not limited to the following examples.

[Example 1]

The X-ray inspection was performed by the X-ray inspection device 1 illustrated in FIG. 6. As the inspected object 10, a film having a thickness of about 30 μm was conveyed at 30 m/min. A sealed type was used as the X-ray radiation device 2, and the voltage and current conditions were set based on the inspected object 10. An example of a procedure for setting these conditions will be described. First, a film containing metal foreign matter of about $\phi40$ $\mu$m to be inspected is installed in accordance with a conveyance position, and is conveyed at an extremely low speed (for example, 0.1 m/min). Since a line sensor camera is used as the imaging device 3 as described later, this is conveyance for capturing an image of a portion of the metal foreign matter. The voltage gradually decreases starting from a large value (for example, 80 keV), and is set to a voltage at which the ratio of the decreasing range of the signal value at the metal foreign matter portion to the signal value of the film formation is the largest in the signal value output from the imaging device 3. In the present example, the voltage was 40 keV. Next, at the voltage, the current is set to a settable maximum value (for example, 800 $\mu$A). In this state, it is confirmed that the signal value output from the imaging device 3 in the film formation is not saturated when the exposure time (24 $\mu$s) is set to realize an imaging resolution of 12 $\mu$m at a speed of 30 m/min. If saturation occurs, the set value of the current is lowered to the extent that saturation does not occur. In the present Example, the value was 800 $\mu$A.

The X-ray shielding member 4 for shielding X-rays incident on the scintillator 31 was disposed between the inspected object 10 and the scintillator 31. The X-ray shielding member 4 was a metal plate in which a slit having a width of about 0.1 mm was formed, and was installed such that the longitudinal direction of the slit was substantially orthogonal to the conveyance direction of the inspected object. As the scintillator 31, a particle type having a thickness of about 0.1 mm was used. The imaging device 3 was installed using a line sensor camera such that the longitudinal direction to be imaged was substantially orthogonal to the conveyance direction of the inspected object 10. The imaging device 3 imaged the lower surface of the scintillator 31 (surface facing the imaging device 3) with a resolution of 12 $\mu$m in both the longitudinal direction and the conveyance direction. The imaging device 3 and the scintillator 31 were installed so that the distance L1 would be 50 mm and the distance L2 was 55 mm. Since the focal diameter R was 50 $\mu$m, the blur width r was 5 $\mu$m. In this condition, a metal foreign matter having a diameter of about $\phi40$ $\mu$m was subjected to X-ray inspection. The blur width r was one sixth or less of the diameter of the metal foreign matter. In the captured image, a binarization threshold was set at $3\sigma$ of the luminance variation at the normal position of the inspected object 10, and the number of pixels that could be detected as dark signals was seven, and sufficient inspection was possible.

[Example 2]

The X-ray inspection was performed by the X-ray inspection device 1 illustrated in FIG. 7. As the inspected object 10, a transparent film having a thickness of about 20 $\mu$m was conveyed at 40 m/min. A sealed type was used as the X-ray radiation device 2, and the voltage and current conditions were the same as those in Example 1 (voltage: 40 keV, current: 800 $\mu$A). As the scintillator 31, a particle type having a thickness of about 0.1 mm was used. The imaging device 3 was installed using a line sensor camera such that the longitudinal direction to be imaged was substantially orthogonal to the conveyance direction of the inspected object 10. The imaging device 3 imaged, via the inspected object 10, the upper surface of the scintillator 31 (surface facing the measurement object 10) with a resolution of 15 $\mu$m in both the longitudinal direction and the conveyance direction. The imaging device 3 and the scintillator 31 were installed so that the distance L1 would be 50 mm and the distance L2 was 55 mm. Since the focal diameter R was 50 $\mu$m, the blur width r was 5 $\mu$m. In this condition, a metal foreign matter having a diameter of about $\phi50$ $\mu$m was subjected to X-ray inspection. The blur width r was one sixth or less of the diameter of the metal foreign matter. In the captured image, a binarization threshold was set at $3\sigma$ of the luminance variation at the normal position of the inspected object 10, and the number of pixels that could be detected as dark signals was eight, and sufficient inspection was possible.

[Example 3]

The X-ray inspection was performed by the X-ray inspection device 1 illustrated in FIG. 6. As the inspected object 10, a film having a thickness of about 30 $\mu$m was conveyed at 5 m/min. A sealed type was used as the X-ray radiation device 2, and the voltage and current conditions were the same as those in Example 1 (voltage: 40 keV, current: 800 $\mu$A). As the scintillator 31, a particle type having a thickness of about 0.1 mm was used. The imaging device 3 was installed using a line sensor camera such that the longitudinal direction to be imaged was substantially orthogonal to the conveyance direction of the inspected object 10. The imaging device 3 imaged the lower surface of the scintillator 31 (surface facing the imaging device 3) with a resolution of 12 $\mu$m in both the longitudinal direction and the conveyance direction. The imaging device 3 and the scintillator 31 were installed so that the distance L1 would be 50 mm and the distance L2 was 55 mm. Since the focal diameter R was 50 $\mu$m, the blur width r was 5 $\mu$m. In this condition, a metal foreign matter having a diameter of about $\phi30$ $\mu$m was subjected to X-ray inspection. The blur width r was one sixth or less of the diameter of the metal foreign matter. In the captured image, a binarization threshold was set at $3\sigma$ of the luminance variation at the normal position of the inspected object 10, and the number of pixels that could be detected as dark signals was six, and sufficient inspection was possible.

[Comparative Example 1]

The X-ray inspection was performed by the X-ray inspection device 1 illustrated in FIG. 8. The inspected object 10, a metal foreign matter having a diameter of about 40 $\mu$m to be inspected, and the X-ray radiation device 2 were the same as those in Example 1, and the conveyance speed of the inspected object 10 was 30 m/min as in Example 1. The distance from the X-ray radiation device 2 to the inspected object 10 was 50 mm, the voltage of the X-ray radiation device 2 was 40 keV, and the current was 800 $\mu$A. As the imaging device 3, a commercially available X-ray camera including a single crystal scintillator 31 and a sensor 32 in which cells having a size of about 50 $\mu$m are arranged was used. In order to achieve a resolution (12 $\mu$m) equivalent to that of Example 1, the distance from the X-ray radiation device 2 to the imaging device 3 was set to about 200 mm. Under this condition, the binarization threshold was set with $3\sigma$ of the luminance variation at the normal position of the inspected object 10, but the metal foreign matter could not be detected.

[Comparative Example 2]

In Comparative Example 1, it was determined that the metal foreign matter could not be detected due to the influence of blurring (penumbra), then the condition of Comparative Example 1 was changed, and the distance from the X-ray radiation device 2 to the imaging device 3 was set to 55 mm. In this state, the current value was set to 550 $\mu$A so that the signal value output from the imaging device 3 would not be saturated due to the film formation. Other conditions were the same as in Comparative Example 1. Under this condition, the binarization threshold was set with $3\sigma$ of the luminance variation at the normal position of the inspected object 10, and the metal foreign matter could be detected by one or two pixels. However, a large amount of noise was superimposed on the image based on the signal output from the imaging device 3, and in the case of an inspection condition for detecting one or two or more pixels, erroneous detection increased.

[Comparative Example 3]

In view of the results of Comparative Example 1 and Comparative Example 2, the current of the X-ray radiation device 2 was adjusted in the range of 700 $\mu$A to 800 $\mu$A, and the distance from the X-ray radiation device 2 to the imaging device 3 was adjusted in the range of 100 mm to 180 mm. Other conditions were the same as in Comparative Example 1. The reason why the distance from the X-ray radiation device 2 to the imaging device 3 was set to 100 mm or more was that by setting the imaging resolution of the inspected object 10 to about 25 $\mu$m or less, the metal foreign matter would be stably detected as two pixels or more in each of the vertical and horizontal directions of the captured image. The current of the X-ray radiation device 2 is a result of adjusting the signal value output from the imaging device 3 so as not to be saturated in the film formation at each distance. However, it has not been possible to find a condition under which metal foreign matter can be stably detected in four pixels or more (two pixels in a vertical direction $\times$ two pixels in a horizontal direction).

Industrial Applicability

According to the X-ray inspection device and the X-ray inspection method of the present invention, inspection of the minute metal foreign matter reducing influence of the blur caused by the focal diameter of the X-ray radiation device having the finite width can be achieved.

Reference Signs List

1    X-RAY INSPECTION DEVICE

2    X-RAY RADIATION DEVICE

3    IMAGING DEVICE

4    X-RAY SHIELDING MEMBER

10    INSPECTED OBJECT

11    METAL FOREIGN MATTER

11a    METAL FOREIGN MATTER

12    BLUR

31    SCINTILLATOR

32    SENSOR

**Claims**

1.  An X-ray inspection device comprising:

    an X-ray radiation device configured to emit an X-ray toward an inspected object;
    a scintillator configured to convert an X-ray emitted from the X-ray radiation device and incident through the inspected object into visible light; and
    an imaging device including an optical unit configured to collect the visible light emitted from the scintillator, the imaging device being configured to receive the visible light, wherein
    the X-ray radiation device and the scintillator are installed such that the following formula (1) is 30 μm or less, where L1 [mm] represents a distance from a radiation position of the X-ray radiation device to an installation position or a conveyance position of the inspected object, L2 [mm] represents a distance from the radiation position to the scintillator, and R [μm] represents a focal diameter of the X-ray radiation device:

    $$\text{Formula (1): } (L2 - L1) \times R/L1$$

2.  The X-ray inspection device according to claim 1, wherein imaging resolution of the imaging device for imaging the scintillator is 60 μm or less.

3.  The X-ray inspection device according to claim 1, wherein the imaging device is installed so as to image a facing surface that is included in the scintillator and that faces the inspected object.

4.  The X-ray inspection device according to claim 3, wherein

    the inspected object is a light transmissive object, and
    the imaging device is installed so as to image the facing surface of the scintillator via the inspected object, the facing surface facing the inspected object.

5.  The X-ray inspection device according to claim 1, wherein the imaging device is installed so as to image an opposite surface that is included in the scintillator and that is opposite to the facing surface facing the inspected object.

6.  The X-ray inspection device according to claim 1, wherein the imaging device is a line sensor camera or a time delay integration camera.

7.  The X-ray inspection device according to claim 3 or 4, wherein

    the imaging device is a line sensor camera or a time delay integration camera, and
    a member configured to shield the X-ray incident on the scintillator in a region other than at least an imaged region of the scintillator imaged by the imaging device is installed between the installation position or the conveyance position of the inspected object and the scintillator.

8.  The X-ray inspection device according to claim 5, wherein

    the imaging device is a line sensor camera or a time delay integration camera, and
    a member that shields the X-ray incident on the scintillator in a region other than at least a facing region in a surface that is included in the scintillator and that faces the inspected object, the facing region being across the scintillator from an imaged region of the scintillator imaged by the imaging device, is installed between the installation position or the conveyance position of the inspected object and the scintillator.

9.  An X-ray inspection method comprising:

emitting an X-ray toward an inspected object;

causing the emitted X-ray to be incident on a scintillator via the inspected object to convert the emitted X-ray into visible light by the scintillator; and

collecting the visible light emitted from the scintillator using an optical unit to capture an image, wherein a radiation position of the X-ray and a position of the scintillator are set such that the following formula (1) is one sixth or less of a minimum diameter of a defect to be detected defined for each inspected object, where L1 [mm] represents a distance from the radiation position of the X-ray to the inspected object, L2 [mm] represents a distance from the radiation position to the scintillator, and R [μm] represents a focal diameter of the X-ray at the radiation position of the X-ray:

$$\text{Formula (1): (L2 - L1)} \times \text{R/L1}$$

10. The X-ray inspection method according to claim 9, wherein imaging resolution for imaging the scintillator is one third or less of the minimum diameter of the defect to be detected defined for each inspected object.

11. The X-ray inspection method according to claim 9, further comprising imaging a facing surface that is included in the scintillator and that faces the inspected object.

12. The X-ray inspection method according to claim 11, wherein

the inspected object is a light transmissive object, and

the X-ray inspection method further comprises imaging the facing surface of the scintillator via the inspected object, the facing surface facing the inspected object.

13. The X-ray inspection method according to claim 9, further comprising imaging an opposite surface that is included in the scintillator and that is opposite to the facing surface facing the inspected object.

14. The X-ray inspection method according to claim 9, further comprising imaging the scintillator linearly.

15. The X-ray inspection method according to claim 11 or 12, further comprising:

imaging the scintillator linearly; and

shielding the X-ray incident on the scintillator in a region other than at least a region where the scintillator is imaged.

16. The X-ray inspection method according to claim 13, further comprising:

imaging the scintillator linearly; and

shielding the X-ray incident on the scintillator in a region other than at least a facing region in a surface that is included in the scintillator and that faces the inspected object, the facing region being across the scintillator from a region where the scintillator is imaged.

# FIG.1

1

2

X-RAY

10    11

31

3

# FIG.2

# FIG.3

X-RAY

31

FLUORESCENT
PARTICLE

# FIG.4

1

2

10

31

CONVEYANCE
DIRECTION

3

# FIG.5

X-RAY

CONVEYANCE DIRECTION

10

4            4

31

FLUORESCENT PARTICLE

DESIRED REGION FOR ACQUIRING LIGHT EMISSION SIGNAL

3

# FIG.6

# FIG.7

CONVEYANCE
DIRECTION

# FIG.8

# FIG.9

# FIG.10

# EP 4 563 984 A1

## INTERNATIONAL SEARCH REPORT

| International application No. |
|---|
| **PCT/JP2023/021456** |

### A. CLASSIFICATION OF SUBJECT MATTER

*G01N 23/04*(2018.01)i
FI:  G01N23/04

According to International Patent Classification (IPC) or to both national classification and IPC

### B. FIELDS SEARCHED

Minimum documentation searched (classification system followed by classification symbols)

G01N23/00-G01N23/2276

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

JSTPlus/JMEDPlus/JST7580 (JDreamIII)

### C. DOCUMENTS CONSIDERED TO BE RELEVANT

| Category* | Citation of document, with indication, where appropriate, of the relevant passages | Relevant to claim No. |
|---|---|---|
| X | JP 2013-178242 A (HITACHI HIGH-TECHNOLOGIES CORP) 09 September 2013 (2013-09-09) paragraphs [0032], [0034], [0058], fig. 1, 3, 5, 15, 17 | 1-2, 5-6, 9-10, 13-14 |
| Y | | 3, 7-8, 11, 15-16 |
| A | | 4, 12 |
| Y | JP 2007-155653 A (OLYMPUS CORP) 21 June 2007 (2007-06-21) fig. 1 | 3, 7, 11, 15 |
| A | | 4, 12 |
| Y | JP 2018-13369 A (MITSUBISHI ELECTRIC CORP) 25 January 2018 (2018-01-25) fig. 2 | 8, 16 |
| A | | 4, 12 |

☐ Further documents are listed in the continuation of Box C.    ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **20 June 2023** | **04 July 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

21

## INTERNATIONAL SEARCH REPORT
### Information on patent family members

International application No.

**PCT/JP2023/021456**

| Patent document cited in search report | | | Publication date (day/month/year) | Patent family member(s) | Publication date (day/month/year) |
|---|---|---|---|---|---|
| JP | 2013-178242 | A | 09 September 2013 | US 2014/0328459 A1 paragraphs [0045], [0047], [0067], fig. 1, 3, 5<br>WO 2013/118386 A1<br>EP 2813841 A1 | |
| JP | 2007-155653 | A | 21 June 2007 | (Family: none) | |
| JP | 2018-13369 | A | 25 January 2018 | (Family: none) | |

Form PCT/ISA/210 (patent family annex) (January 2015)

**EP 4 563 984 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019215205 A